# EUROPÄISCHE PATENTSCHRIFT

(11) **EP 2 902 905 B1**
(45) Veröffentlichungstag und Bekanntmachung des Hinweises auf die Patenterteilung: **30.03.2016**
(21) Anmeldenummer: 14192756.6
(22) Anmeldetag: 12.11.2014
(51) Int. Cl.: G06F 11/14, G06F 11/16

(54) **Verfahren zur Überprüfung der Abarbeitung von Software**
Method for checking the processing of software
Procédé de contrôle de traitement de logiciel

(30) Priorität: 23.01.2014 AT 500432014
(43) Veröffentlichungstag der Anmeldung: 05.08.2015
(73) Patentinhaber: Bernecker+Rainer Industrie-Elektronik Gesellschaft MbH, 5142 Eggelsberg (AT)
(72) Erfinder: Kaufleitner, Franz, 5122 Hochburg-Ach (AT); Holzleitner, Alois, 5280 Braunau am Inn (AT)
(74) Vertreter: Patentanwälte Pinter & Weiss OG

(56) Entgegenhaltungen:
- DE-A1- 10 158 317
- DE-A1-102009 054 637
- DE-A1-102011 053 580

## Beschreibung

Die gegenständliche Erfindung betrifft ein Verfahren zur Überprüfung der Abarbeitung einer Automatisierungsaufgabe in Form einer Software in einer mehrkanaligen sicherheitsgerichteten Automatisierungskomponente mit zumindest zwei Kanälen, wobei in einem Abarbeitungsschritt der Software in den zumindest zwei Kanälen jeweils Ausgangsdaten erzeugt werden, die in einer Vergleichseinheit miteinander verglichen werden, und die Software in einem Kanal der Automatisierungskomponente in einem aktiven Teil der Hardware des Kanals ausgeführt wird und in diesem Kanal in einer Überprüfungseinheit eine zur Software erste diversitäre Software ausgeführt wird.

Damit elektronische Automatisierungskomponenten, wie z.B. Steuergeräte, Aktuatoren, Sensoren, etc., für Aufgaben im Personenschutz eingesetzt werden dürfen, müssen diese besonderen Anforderungen genügen. Wesentlicher Aspekte dieser Anforderungen ist es, die Automatisierungskomponenten so robust zu gestalten, dass es bei Auftreten von Fehlern in der Automatisierungskomponente zu keinen für Personen im Umfeld der Automatisierungskomponente gefahrbringenden Zuständen kommen kann. Um diese Anforderung zu erfüllen, sind solche elektronische Automatisierungskomponenten üblicherweise mit einer Diagnosefunktion ausgestattet. Diese Diagnosefunktion hat die Aufgabe, mögliche Fehler im aktiven Teil der Automatisierungskomponente aufzudecken und die vom Fehler betroffenen Teile der Automatisierungskomponente zu deaktivieren, oder eine andere sicherheitsgerichtete Aktion auszulösen. Als aktiver Teil wird dabei eine Komponente verstanden, die Daten verarbeitet, Berechnungen durchführt, etc., also typischerweise Prozessoren, Recheneinheiten, speicherprogrammierbare Steuerelemente, usw. Damit die geforderten Sicherheitslevel, z.B. ein SIL (Sicherheits-Integritätslevel) gemäß der IEC 61508 oder anderer Normen, erreicht werden, werden sicherheitsrelevante Funktionen in einer Automatisierungskomponente üblicherweise auch mehrkanalig ausgeführt. Dabei ist eine sicherheitsrelevante Funktion mehrfach vorhanden und eine Berechnung der Funktion wird nur dann als gültig angesehen, wenn alle Kanäle das gleiche Ergebnis liefern.

Für sicherheitsgerichtete Automatisierungssysteme bzw. Automatisierungskomponenten werden im Rahmen der Entwicklung sogenannte Fehlermöglichkeits- und Einfluss-Analysen (Failure Mode and Effects Analysis, FMEA) durchgeführt. Das sind an sich bekannte analytische Methoden, um potenzielle Schwachstellen zu finden, mit dem Ziel der Fehlervermeidung und Erhöhung der technischen Zuverlässigkeit.

Die Diagnosefunktion in einer Automatisierungskomponente ist in der Regel so gestaltet, dass mögliche, z.B. im Zuge des Systementwurfs in einer FMEA ermittelte, Fehler diagnostiziert und erkannt werden. Die Diagnoseroutinen sind in der Automatisierungskomponente in eigenen Diagnoseprozessoren statisch implementiert und passen sich nicht oder nur sehr wenig dem anwendungsspezifischen Umfeld im aktiven Teil der Automatisierungskomponente an. Sofern in der Automatisierungskomponente komplexe elektronische Bauteile wie beispielsweise Prozessoren verwendet werden, sind umfangreiche und aufwendige Diagnosefunktionen, wie z.B. Opcode Tests und Register Tests, notwendig. Mit steigender Komplexität des eingesetzten Prozessors und/oder der darauf laufenden Software wird es immer schwieriger, die Diagnose in der Automatisierungskomponente korrekt zu implementieren. Abgesehen davon kann die Diagnose nicht für alle möglichen Anwendungen einer Automatisierungskomponente implementiert werden, womit die Diagnose keine hundertprozentige Sicherheit geben kann.

Daher werden die Kanäle einer sicherheitsgerichteten, mehrkanaligen Automatisierungskomponente diversitär ausgeführt, entweder mit diversitärer Hardware oder diversitärer Software. Im technischen Zusammenhang bedeutet Diversität, dass ein System oder eine Funktion redundant ausgeführt wird, wobei aber bewusst unterschiedliche Realisierungen des Systems oder der Funktion verwendet werden. Hier werden folglich die verschiedenen Kanäle der mehrkanaligen Automatisierungskomponente unterschiedlich ausgeführt, also mit verschiedener Hardware oder verschiedener Software. Eine Automatisierungsaufgabe in der Automatisierungskomponente wird daher mit unterschiedlicher Hardware oder unterschiedlicher Software ausgeführt, wobei im fehlerfreien Fall die unterschiedlichen Implementierungen der Automatisierungsaufgabe dieselben Ergebnisse liefern müssen.

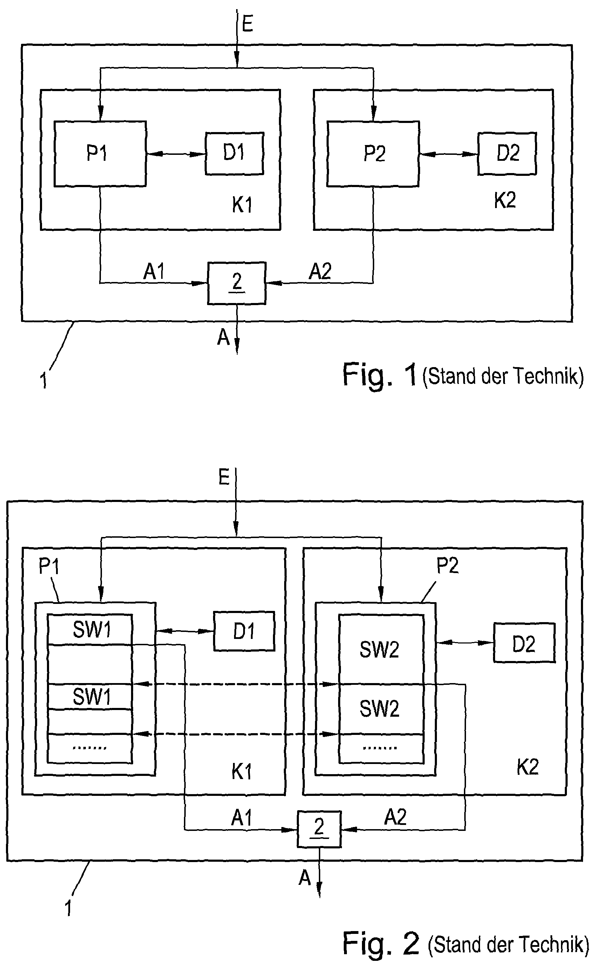

Wird diversitäre Hardware (siehe Fig.1) eingesetzt, so müssen in den verschiedenen Kanälen Prozessoren mit unterschiedlichen Prozessorcores eingesetzt werden. Der aktuelle Trend bei den Prozessorherstellern geht aber in eine gänzlich andere Richtung, nämlich in Richtung einer Fokussierung auf möglichst wenige verschiedene Prozessorcores. Viele Hersteller von Prozessoren für den Embedded-Bereich, wie sie auch in Automatisierungskomponenten eingesetzt werden, verwenden in ihren Produkten häufig sogenannte ARM (Advanced RISC Machines) Cores, sodass damit Hardware Diversität nur mehr durch den Einsatz "exotischer" Prozessoren möglich wird. "Exotische" Prozessoren haben aber natürlich keine Verbreitung und damit keine nennenswerte Betriebsbewährung, was für Anwendungen in sicherheitsgerichteten Automatisierungskomponenten im Personenschutz ebenfalls ein wichtiger Aspekt ist. Der Trend geht daher bei sicherheitsgerichteten Automatisierungskomponenten in Richtung homogener Hardware.

Ein alternativer Lösungsansatz ist es daher, die Software diversitär zu gestalten (siehe Fig.2). Dabei können Fehler im Prozessorcore bzw. im Speicher mit ausreichend hoher Wahrscheinlichkeit aufgedeckt werden. Diversitäre Software hat jedoch den Nachteil, dass die Laufzeit der verschiedenen Kanäle sich stark unterscheiden kann. Die Performance der Automatisierungskomponenten eines mehrkanaligen Systems wird jedoch vom langsamsten Kanal bestimmt, weil das ermittelte Ergebnis erst nach dem Vergleich der Daten aller Kanäle gültig ist. Eine Überprüfung mittels diversitärer Software kann beispielsweise der DE 10 2009 054 637 A1 entnommen werden.
Nach der DE 10 2011 053 580 A1 erfolgt zusätzlich zur Überprüfung der Ergebnisse von zwei Kanälen auch eine Überprüfung einer Software innerhalb eines Kanals, indem in einem Kanal diversitäre Software implementiert ist und die Ergebnisse innerhalb eines Kanals verglichen werden. Damit muss aber innerhalb eines Kanals auf das Vorliegen der Ergebnisse der Software und der diversitären Software gewartet werden, wodurch auch hier die Performance von der langsamsten Software bestimmt wird.

Aus der DE 101 58 317 A1 ist eine mehrkanalige sicherheitsgerichtete Automatisierungskomponente zur Ausführung eines diversitären Programmablaufs auf mindestens zwei Bearbeitungseinheiten bekannt.

Es ist daher einer Aufgabe der gegenständlichen Erfindung ein Verfahren zur einfachen, schnellen und zuverlässigen Überprüfung der Funktion und der Abarbeitung einer Automatisierungsaufgabe in einer mehrkanaligen sicherheitsgerichteten Automatisierungskomponente anzugeben, das die oben genannten Nachteile nicht aufweist.

Diese Aufgabe wird durch das im unabhängigen Anspruch 1 definierte Verfahren erfindungsgemäß dadurch gelöst, indem in einem Abarbeitungsschritt der Software zugehörige Eingangsdaten und mit der Software in diesem Abarbeitungsschritt berechnete erste Ausgangsdaten in einer Speichereinheit zwischengespeichert werden und die diversitäre Software in der Überprüfungseinheit aus den gespeicherten Eingangsdaten unabhängig von der Abarbeitung der Software im aktiven Teil zweite Ausgangsdaten berechnet und zur Überprüfung der Abarbeitung die mit der diversitären Software berechneten zweiten Ausgangsdaten mit den gespeicherten ersten Ausgangsdaten der Software verglichen werden.
Auf diese Weise kann die Überprüfung der Abarbeitung der Software im aktiven Teil eines Kanals von der diversitären Software entkoppelt werden. Die Abarbeitung der Software im aktiven Teil, also die Durchführung der eigentlichen Automatisierungsaufgabe, wird dadurch nicht behindert, womit die Performance der Automatisierungskomponente im Wesentlichen von der Abarbeitung der Software im aktiven Teil abhängt, aber nicht von der Überprüfung durch die diversitäre Software. Damit gelingt es eine Automatisierungskomponente mit diversitärer Software umzusetzen, die aber keinen Performanceeinbußen wie im Stand der Technik unterliegt. Hierzu ist es auch unerheblich, ob die Hardware diversitär oder homogen ausgeführt wird.
Wenn die Überprüfung der Software durch die diversitäre Software nach einem n-ten Abarbeitungsschritt der Software erfolgt, wobei n eine ganzzahlige positive Zahl größer Eins ist, kann die diversitäre Software auch langsamer sein, als die Software im aktiven Teil des Kanals. Das ermöglicht es insbesondere auch durch Coded Processing erstellte diversitäre Software zu verwenden, die in der Regel um Größenordnungen langsamer läuft als die zu überprüfende Software. Ebenso kann damit die diversitäre Software auf einer Überprüfungseinheit ausgeführt werden, die langsamer arbeitet als der aktive Teil des Kanals.

Besonders vorteilhaft wird die Überprüfungseinheit in einem Diagnoseteil implementiert, in der neben der diversitären Software auch Diagnosefunktionen als Diagnosesoftware ausgeführt werden. Damit kann im Kanal vorhandene Hardware gleichzeitig für die Durchführung der Überprüfung genutzt werden.

Vorzugsweise erfolgt die Überprüfung der Software zusätzlich noch in einem zweiten Kanal oder in allen Kanälen der mehrkanaligen sicherheitsgerichteten Automatisierungskomponente, was die Sicherheit der Automatisierungskomponente noch weitere erhöht.

Die Sicherheit der Automatisierungskomponente kann erhöht werden, wenn in zwei Kanälen der mehrkanaligen sicherheitsgerichteten Automatisierungskomponente in einem Abarbeitungsschritt der Software jeweils Ausgangsdaten berechnet werden, die nach dem Abarbeitungsschritt miteinander verglichen werden.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine sicherheitsgerichtete Automatisierungskomponente nach dem Stand der Technik,
Fig.2 eine sicherheitsgerichtete Automatisierungskomponente nach dem Stand der Technik mit diversitärer Software,
Fig.3 eine erfindungsgemäße sicherheitsgerichtete Automatisierungskomponente mit Überprüfung der Abarbeitung einer Automatisierungsaufgabe.

Fig.1 zeigt eine sicherheitsgerichtete Automatisierungskomponente 1 nach dem Stand der Technik. Darin sind zwei Kanäle K1, K2 implementiert. Jeder Kanal K1, K2 umfasst einen aktiven Teil P1, P2 und einen Diagnoseteil D1, D2. Ein aktiver Teil P1, P2 ist beispielswiese ein Prozessor, eine speicherprogrammierbare Schaltung (z.B. ein FPGA (Field Programmable Gate Array)) oder ein ähnlicher Bauteil, der Daten verarbeiten oder Berechnungen durchführen kann. Der aktive Teil P1, P2 führt eine darauf implementierte Automatisierungsaufgabe, z.B. eine Datenmanipulation, eine Berechnung, etc., aus. Der Diagnoseteil D1, D2 ist als programmierbarer Bauteil, z.B. als Prozessor, ausgeführt, auf dem Diagnosefunktionen zur Erkennung und Behandlung von Fehlern im aktiven Teil P1, P2 als Software implementiert sind. Der Diagnoseteil D1, D2 überprüft daher die Funktion der aktiven Bauteile P1, P2 und schreitet ein, falls Fehler erkannt werden, z.B. durch Deaktivieren bestimmter Funktionen der aktiven Bauteile P1, P2 oder durch Überführen der Automatisierungskomponente 1 in einen sicheren Zustand gegebenenfalls in Verbindung mit der Ausgabe einer Fehlermeldung, z.B. an eine übergeordnete Steuerung. Jeder Kanal K1, K2 berechnet aus Eingangsdate E, wie z.B. Steuerdaten oder Messgrößen, eine Ausgangsgröße A1, A2, die in einer Vergleichseinheit 2, z.B. eine eigene Vergleichseinheit oder auch einer der aktiven Teile P1, P2, verglichen werden und bei Gleichheit als gültige Ausgangsdaten A, z.B. Steuergrößen, Rechenergebnisse, etc., ausgegeben werden. Die Hardware, also die aktiven Teile P1, P2, könne dabei diversitär oder gleich ausgeführt sein.

In Fig.2 ist das Beispiel nach Fig.1 mit diversitärer Software in den aktiven Teilen P1, P2 gezeigt. Die Software SW1 im aktiven Teil P1 des ersten Kanals K1 ist hier schneller, als die Software SW2 im aktiven Teil des zweiten Kanals K2. D.h. dass die Software SW1 des ersten Kanals K1, z.B. bei Abarbeitung einer bestimmten Automatisierungsaufgabe, einer Prozedur oder einer bestimmten Funktion, in der Regel auf die Software SW2 des zweiten Kanals K2, z.B. bei Abarbeitung derselben Automatisierungsaufgabe, Prozedur oder Funktion, warten muss (angedeutet durch die strichlierten Doppelpfeile), da nach jeder Abarbeitung die Ergebnisse der Abarbeitung, z.B. die Ausgangsdaten A1, A2, verglichen werden müssen. Die langsamere Software, hier SW2, bestimmt damit die Geschwindigkeit der Automatisierungskomponente. Im hier gezeigten Ausführungsbeispiel erfolgt die Überprüfung z.B. nach einem vollständigen Codezyklus der Software SW1, SW2.

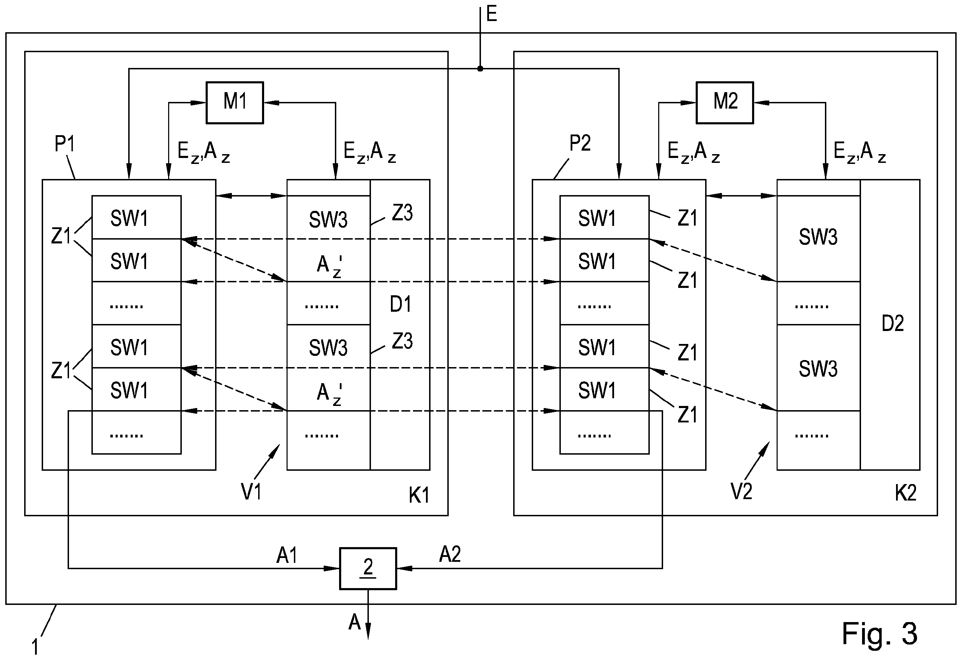

Fig.3 zeigt eine erfindungsgemäße Umsetzung einer mehrkanaligen sicherheitsgerichteten Automatisierungskomponente 1. Ein Kanal K1, K2 umfasst dabei wiederum jeweils einen aktiven Teil P1, P2 und einen Diagnoseteil D1, D2. In den Diagnoseteilen D1, D2 sind wiederum bestimmte Diagnosefunktionen für die zugehörigen aktiven Teile P1, P2 programmiert. Die Hardware der aktiven Teile P1, P2 ist hier homogen und in beiden aktiven Teilen P1, P2 läuft hier die gleiche Software SW1, d.h. dass in beiden Kanälen K1, K2 auf den gleichen aktiven Teilen P1, P2 die gleiche Software SW1 läuft.

Anstelle der Software SW1 könnte aber im aktiven Teil P2 des zweiten Kanals K2 auch eine zur im ersten Kanal K1 laufenden Software SW1 diversitäre Software SW2 implementiert sein, wie z.B. in Fig.2 beschrieben, ohne den Erfindungsgedanken zu verlassen. Gleichfalls könnte der aktive Teil P2 im zweiten Kanal K2 als diversitäre Hardware ausgeführt sein.

In einer Überprüfungseinheit V1, z.B. der Diagnoseteil D1, im ersten Kanal K1 wird nun eine zur Software SW1 im aktiven Teil P1 diversitäre Software SW3 implementiert und ausgeführt. Die Abarbeitung der diversitären Software SW3 in der Überprüfungseinheit V1 ist dabei zeitlich von der Abarbeitung der Software SW1 im aktiven Teil P1 entkoppelt und damit in der Abarbeitung zeitlich unabhängig von der Abarbeitung der Software SW1 in aktiven Teil P1. Die Software SW1 im aktiven Teil P1 kann daher z.B. eine Echtzeitanwendung sein, während die diversitäre Software SW3 in der Überprüfungseinheit V1 eine davon unterschiedliche, in der Regel langsamere, Laufzeit hat. Trotzdem wird die diversitäre Software SW3 in der Überprüfungseinheit V1 benutzt, um die Abarbeitung der Software SW1 im aktiven Teil P1 zu überprüfen. Das kann nun aber bei einer langsameren diversitären Software SW3 nur mehr in jedem n-ten, mit der positiven ganzen Zahl n>1, Abarbeitungsschritt Z1 der Software SW1 erfolgen. Dazu werden die für einen Abarbeitungsschritt Z1 der Software SW1 aktuellen Eingangsdaten E_{Z} im ersten Kanal K1 und die daraus von der Software SW1 im aktiven Teil P1 des ersten Kanals K1 berechneten Ausgangsdaten A_{z} in einer Speichereinheit M1 zwischengespeichert. Die diversitäre Software SW3 in der Überprüfungseinheit V1 liest diese gespeicherten Eingangsdaten E_{Z} und Ausgangsdaten A_{z} aus der Speichereinheit M1 aus. Aus den ausgelesenen Eingangsdaten E_{V} berechnet die diversitäre Software SW3 ebenfalls Ausgangsdaten A_{Z}', die im fehlerfreien Fall gleich mit den gespeicherten Ausgangsdaten A_{Z} der Software SW1 im aktiven Teil P1 sein müssen. Die Berechnung der Ausgangsdaten A_{Z}' durch die diversitäre Software SW3 kann dabei länger dauern als die Berechnung der Ausgangsdaten A_{z} im aktiven Teil P1. Beispielsweise kann die Berechnung in der Überprüfungseinheit V1 auch um einen Faktor 100 bis 1000 langsamer als im aktiven Teil P1 sein. Falls die Ausgangsdaten A_{Z} und A_{Z}', die in der Überprüfungseinheit V1 verglichen werden, nicht gleich sind, liegt ein Fehler vor und die Überprüfungseinheit V1 setzt eine entsprechende Aktion, z.B. die Automatisierungskomponente 1 in einen sicheren Zustand überführen, eine Fehlermeldung absetzen oder eine andere sicherheitsgerichtete Aktion auslösen. Nach Abschluss der Überprüfung durch die Software SW3 in der Überprüfungseinheit V1 kann die nächste Überprüfung des aktuellen Abarbeitungsschrittes Z1 starten, wobei dazwischen liegende Eingangsdaten E_{Z} und daraus mit der Software SW1 berechnete Ausgangsdaten A_{z} nicht in der Speichereinheit M1 gespeichert werden müssen.

Wenn t₁ ist Abarbeitungszeit für einen Abarbeitungsschritt Z1 der Software SW1 im aktiven Teil P1 ist und t₂ die Abarbeitungszeit für einen Abarbeitungsschritt Z3 der diversitären Software SW3 in der Überprüfungseinheit V1, dann muss gelten n x t₁ > t₂.

Wenn eine Überprüfungseinheit V1, V2 in einem Diagnoseteil D1, D2 implementiert wird, dann kann die diversitäre Software SW3 zusätzlich neben den im Diagnoseteil D1, D2 als Diagnosesoftware implementierten Diagnosefunktionen laufen, wie in Fig.3 angedeutet.

Die gleiche Überprüfung kann parallel im zweiten Kanal K2, und jeden weiteren Kanal, zwischen der Software SW1, oder SW2 im Falle diversitärer Software in den aktiven Teilen P1, P2, und der dazu diversitären Software SW3 in der Überprüfungseinheit V2 des zweiten Kanals P2 erfolgen.

Die Abarbeitung der Software SW1 in den aktiven Teilen P1, P2 der Kanäle K1, K2 wird daher durch die Überprüfung durch diversitäre Software SW3 in der Überprüfungseinheit V1, V2 nicht gebremst. In den beiden Kanälen findet eine Überprüfung der Abarbeitung der Software SW1 in den aktiven Teilen P1, P2 der beiden Kanäle K1, K2 zu jedem n-ten Abarbeitungsschritt der Software SW1 statt.

Zusätzlich können in jedem Abarbeitungsschritt der Software SW1 im ersten Kanal K1 die dabei erzeugten Ausgangsdaten A1 mit den im zweiten Kanal K2 in diesem Abarbeitungsschritt erzeugten Ausgangsdaten A2 in einer Vergleichseinheit 2 verglichen werden, was den Grad der Überprüfung auf Fehler erhöht. Im Falle von diversitärer Hardware in den beiden Kanälen kann es hier aufgrund verschiedener Laufzeiten in den verschiedenen aktiven Teilen P1, P2 zu Verzögerungen kommen, die aber nicht von der diversitären Software verursacht werden.

Die Überprüfung der Abarbeitung der Software SW1 in der Automatisierungskomponente 1 erfolgt damit durch eine zeitlich entkoppelte diversitäre Software SW3, die beispielsweise in einem Diagnoseteil D1, D2 implementiert wird und die jeden n-ten Abarbeitungsschritt der Software SW1 überwachen bzw. überprüfen kann. Zusätzlich können die durch die Software SW1 erzeugten Ausgangsdaten A1, A2 von zwei Kanälen K1, K2 in jedem Abarbeitungsschritt der Software SW1 wie gehabt verglichen werden. Das an sich schlechtere Laufzeitverhalten von diversitärer Software kann damit durch die Erfindung kompensiert werden. Außerdem ist es dabei unerheblich, ob auch die Hardware diversitär ausgeführt ist oder nicht.

Als Abarbeitungsschritt Z wird hierbei allgemein eine abgeschlossene Rechenoperation in einem aktiven Teil P1, P2 durch die darin laufende Software SW1, SW2 angesehen, z.B. eine mathematische Berechnung durch die Software SW1, SW2, die Ausführung einer Funktion oder Prozedur der Software SW1, SW2, die Verarbeitung von Eingangsdaten gemäß einem vorgegebenen Schema, ein vollständiger Codezyklus der Software SW1, SW2, etc.

Z.B. kann der aktive Teil P1 eines ersten Kanals K1 ein Prozessor mit Unterstützung einer Gleitkommaeinheit FPU sein und die darauf laufende Software SW1 mathematischer Code. Der zugehörige Diagnoseteil D1 ist aber z.B. nur ein einfacherer Prozessor, der nur über eine Floating Point Library verfügt oder ein Prozessor ohne Benutzung der FPU. Trotzdem ist es mit der Erfindung beispielsweise möglich, die hochperformante FPU im aktiven Teil P1 durch eine niederperformante Floating Point Library im Diagnoseteil D1 zu überprüfen.

Mittels bekannter Methoden des sogenannten Coded Processing kann quasi automatisiert diversitäre Software SW3 zu einer vorgegebenen Software SW1 zu erzeugen. Die dabei erzeugte diversitäre Software SW3 ist aber in der Regel um einen Faktor von mindestens 100 langsamer als die Ausgangssoftware. Durch die Erfindung kann nun auch durch Coded Processing erzeugte diversitäre Software SW3 verwendet werden, was den Aufwand für die Erzeugung der diversitäre Software SW3 erheblich reduzieren kann.

Obwohl die Beschreibung nur hinsichtlich einer zweikanaligen sicherheitsgerichteten Automatisierungskomponente 1 beschrieben wurde, kann die Erfindung natürlich analog auf eine Automatisierungskomponente 1 mit mehr als zwei Kanälen angewendet werden.

## Patentansprüche

1. Verfahren zur Überprüfung der Abarbeitung einer Automatisierungsaufgabe in Form einer Software (SW1) in einer mehrkanaligen sicherheitsgerichteten Automatisierungskomponente (1) mit zumindest zwei Kanälen (K1, K2), wobei in einem Abarbeitungsschritt der Software (SW1) in den zumindest zwei Kanälen (K1, K2) jeweils Ausgangsdaten (A1, A2) erzeugt werden, die in einer Vergleichseinheit (2) miteinander verglichen werden, und die Software (SW1) in einem der Kanäle (K1) der Automatisierungskomponente (1) in einem aktiven Teil (P1) der Hardware dieses Kanals (K1) ausgeführt wird und in diesem Kanal (K1) in einer Überprüfungseinheit (V1) eine zur Software (SW1) erste diversitäre Software (SW3) ausgeführt wird, **dadurch gekennzeichnet, dass** in einem Abarbeitungsschritt (Z1) der Software (SW1) zugehörige Eingangsdaten (E_{z}) und mit der Software (SW1) in diesem Abarbeitungsschritt (Z1) berechnete erste Ausgangsdaten (A_{Z}) in einer Speichereinheit (M1) zwischengespeichert werden und die diversitäre Software (SW3) in der Überprüfungseinheit (V1) aus den gespeicherten Eingangsdaten (E_{z}) unabhängig von der Abarbeitung der Software (SW1) im aktiven Teil (P1) zweite Ausgangsdaten (A_{Z}') berechnet und zur Überprüfung der Abarbeitung die mit der diversitären Software (SW3) berechneten zweiten Ausgangsdaten (A_{Z}') mit den gespeicherten ersten Ausgangsdaten (A_{z}) der Software (SW1) verglichen werden.

2. Verfahren nach Anspruch 1, **dadurch gekennzeichnet, dass** die Überprüfung der Software (SW1) durch die diversitäre Software (SW3) nach einem n-ten Abarbeitungsschritt (Z1) der Software (SW1) erfolgt, wobei n eine positive ganze Zahl größer Eins ist.

3. Verfahren nach Anspruch 1 oder 2, **dadurch gekennzeichnet, dass** die Überprüfungseinheit (V1) in einem Diagnoseteil (D1) implementiert wird, in der neben der diversitären Software (SW3) auch Diagnosefunktionen als Diagnosesoftware ausgeführt werden.

4. Verfahren nach einem der Ansprüche 1 bis 3, **dadurch gekennzeichnet, dass** die Überprüfung der Software (SW1) zusätzlich in einem zweiten Kanal (K2) oder in allen Kanälen der mehrkanaligen sicherheitsgerichteten Automatisierungskomponente (1) durchgeführt wird.

5. Verfahren nach Anspruch 4 , **dadurch gekennzeichnet, dass** in zumindest einem weiteren Kanal (K2) der mehrkanaligen sicherheitsgerichteten Automatisierungskomponente (1) anstelle der Software (SW1) eine dazu diversitäre zweite Software (SW2) ausgeführt wird.

6. Verfahren nach einem der Ansprüche 1 bis 5, **dadurch gekennzeichnet, dass** in zwei Kanälen (K1, K2) der mehrkanaligen sicherheitsgerichteten Automatisierungskomponente (1) in einem Abarbeitungsschritt (Z1) der Software (SW1), oder der dazu diversitären zweiten Software (SW2), jeweils Ausgangsdaten (A_{z}) berechnet werden, die nach dem Abarbeitungsschritt (Z1) miteinander verglichen werden.

## Claims

1. Method for verifying the processing of an automation task in the form of software (SW1) in a multi-channel safety-oriented automation component (1) with two channels (K1, K2), whereas output data (A1, A2), that are compared in a comparison unit (2), are generated in the at least two channels (K1, K2) in a processing step of the software (SW1) and in a channel (K1) of the automation component (1), the software (SW1) is run in an active unit (P1) of the hardware of the channel (K1), and first diversity software (SW3) redundant relative to the software (SW1) is run in a verification unit (V1) in this channel (K1), **characterized in that** in a processing step (Z1) of the software (SW1) associated input data (E_{z}) and first output data (A_{z}) computed by the software (SW1) in this processing step (Z1) are temporarily stored in a memory unit (M1), and the diversity software (SW3) in the verification unit (V1) computes second output data (Az') based on the stored input data (E_{z}) independently of the processing of the software (SW1) in the active unit (P1), and the second output data (Az') computed by the diversity software (SW3) is compared with the stored first output data (A_{z}) of the software (SW1) in order to verify the processing.

2. Method according to Claim 1, **characterized in that** the verification of the software (SW1) by the diversity software (SW3) happens after an n^{th} processing step (Z1) of the software (SW1), where n is a positive integer greater than one.

3. Method according to Claims 1 or 2, **characterized in that** the verification unit (V1) is implemented in a diagnostics unit (D1) in which both diversity software (SW3) as well as diagnostics functions in the form of diagnostics software are run.

4. Method according to Claims 1 through 3, **characterized in that** the verification of the software (SW1) is additionally implemented in a second channel (K2) or in all channels of the multi-channel safety-oriented automation component (1).

5. Method according to Claim 4, **characterized in that** instead of the software (SW1) second diversity software (SW2) different therefrom is implemented in at least one additional channel (K2) of the multi-channel safety-oriented automation component (1).

6. Method according to one of Claims 1 through 5, **characterized in that** output data (A_{z}) are computed respectively in two channels (K1, K2) of the multi-channel safety-oriented automation component (1) in a processing step (Z1) of the software (SW1), or of the second diversity software (SW2), which output data are compared following the processing step (Z1).

## Revendications

1. Procédé de vérification et de traitement d'une tâche d'automatisation sous la forme d'un logiciel (SW1) dans un composant d'automatisation de sécurité à plusieurs canaux (1) avec au moins deux canaux (K1, K2), dans lequel, au cours d'une étape d'exécution du logiciel (SW1), des données de sortie (A1, A2) sont générées respectivement dans les au moins deux canaux (K1, K2) et comparées les unes avec les autres dans une unité de comparaison (2), et le logiciel (SW1) est exécuté dans l'un des canaux (K1) du composant d'automatisation (1) dans une partie active (P1) du matériel de ce canal (K1), et un premier logiciel (SW3) différent du logiciel (SW1) est exécuté dans ce canal (K1) dans une unité de vérification (V1), **caractérisé en ce que** dans une étape d'exécution (Z1) du logiciel (SW1), des données d'entrée (Ez) associées et des premières données de sortie (Az) calculées à l'aide du logiciel (SW1) au cours de cette étape d'exécution (Z1) sont stockées temporairement dans une unité de mémoire (M1), et des deuxièmes données de sortie (Az') sont calculées dans l'unité de vérification (V1) à l'aide du logiciel différent (SW3) à partir des données d'entrée stockées (Ez) indépendamment de l'exécution du logiciel (SW1) dans la partie active (P1), et les deuxièmes données de sortie (Az') calculées à l'aide du logiciel différent (SW3) sont comparées avec les premières données de sortie stockées (Az) du logiciel (SW1), pour vérifier l'exécution.

2. Procédé selon la revendication 1, **caractérisé en ce que** la vérification du logiciel (SW1) par le logiciel différent (SW3) est effectuée suite à une n^{ième} étape d'exécution (Z1) du logiciel (SW1), n étant un nombre entier positif supérieur à un.

3. Procédé selon la revendication 1 ou 2, **caractérisé en ce que** l'unité de vérification (V1) est mise en oeuvre dans une partie de diagnostic (D1), dans laquelle des fonctions de diagnostic sont exécutées en tant que logiciel de diagnostic en plus du logiciel différent (SW3).

4. Procédé selon l'une des revendications 1 à 3, **caractérisé en ce que** la vérification du logiciel (SW1) est également exécutée dans un deuxième canal (K2) ou dans tous les canaux du composant d'automatisation de sécurité à plusieurs canaux (1).

5. Procédé selon la revendication 4, **caractérisé en ce qu**'à la place du logiciel (SW1), un deuxième logiciel (SW2) différent de celui-ci est exécuté dans au moins un autre canal (K2) du composant d'automatisation de sécurité à plusieurs canaux (1).

6. Procédé selon l'une des revendications 1 à 5, **caractérisé en ce que** des données de sortie (Az) sont calculées respectivement dans deux canaux (K1, K2) du composant d'automatisation de sécurité à plusieurs canaux (1) au cours d'une étape d'exécution (Z1) du logiciel (SW1) ou du deuxième logiciel (SW2) différent de celui-ci, et sont comparées les unes avec les autres suite à l'étape d'exécution (Z1).
